# EUROPEAN PATENT SPECIFICATION

(11) **EP 4 230 495 B1**
(45) Date of publication and mention of the grant of the patent: **23.04.2025**
(21) Application number: 23156141.6
(22) Date of filing: 10.02.2023
(51) Int. Cl.: B60W 50/08, B60W 30/09, B60W 40/08, B60W 50/12, B60W 10/06, B60W 10/08, B60W 50/00, B60R 22/48

(54) **DRIVING ASSISTANCE DEVICE FOR VEHICLE**
FAHRASSISTENZVORRICHTUNG FÜR EIN FAHRZEUG
DISPOSITIF D'AIDE À LA CONDUITE POUR VÉHICULE

(30) Priority: 17.02.2022 JP 2022022876
(43) Date of publication of application: 23.08.2023
(73) Proprietor: Suzuki Motor Corporation, Hamamatsu-shi, Shizuoka 432-8611 (JP)
(72) Inventor: TSUNEKAWA, Takafumi, Hamamatsu-shi, Shizuoka 432-8611 (JP)
(74) Representative: Haseltine Lake Kempner LLP

(56) References cited:
- EP-A1- 3 786 011
- CN-A- 110 723 147
- DE-A1- 102006 056 094
- JP-A- 2021 104 725
- US-A1- 2019 291 747
- US-A1- 2021 213 974

## Description

### TECHNICAL FIELD

The present invention relates to a driver assistance device for a vehicle.

### BACKGROUND ART

In the related art, a driving assistance device for a vehicle including an automatic brake system for reducing collision damage between a host vehicle and a forward obstacle is known. This driving assistance device has an accelerator override function of giving, even when it is determined that there is a high chance of a collision with a forward obstacle, priority to acceleration performed by a driver without performing braking or torque down if an accelerating operation is performed by the driver performing an accelerator pedal operation. In the accelerator override function, it is assumed that the forward obstacle is avoided by the driver performing an operation.

In a driving assistance device for a vehicle in Patent Literature 1, it is disclosed that the accelerator override determination unit instructs the brake control unit to release an emergency automatic brake when an accelerator opening degree change amount is larger than a threshold value.

### CITATION LIST

### PATENT LITERATURE

Patent Literature 1: JP6521430B

Collision avoidance assistance apparatus are known from EP3,786,011.

Driving assistance apparatus are known from US2021/213974.

A drive mode switch control device and drive mode switch control method are known from US2019/291747.

A driving support device, vehicle, driving support method and computer program are known from JP2021 104725.

### SUMMARY OF INVENTION

### TECHNICAL PROBLEM

However, in the accelerator override function, when an entire body of a driver leans forward and the accelerator pedal is depressed due to, for example, cough or sneezing of the driver, an unintended acceleration operation may occur. In this way, in a situation in which braking or torque down needs to be performed and an event that may cause unintended acceleration is occurring, the accelerator override function operates in a form of not following an original purpose.

The present invention has been made in view of the above described problems, and an object of the present invention is to prevent unintended acceleration.

### SOLUTION TO PROBLEM

The invention is defined by the appended independent claim. Some optional features are defined by the dependent claim.

### ADVANTAGEOUS EFFECTS OF INVENTION

According to the present invention, unintended acceleration can be prevented.

### BRIEF DESCRIPTION OF DRAWINGS

FIG. 1 is a diagram showing a schematic configuration of a main part of a vehicle.
FIG. 2 is a diagram showing a functional configuration of a driving assistance device for a vehicle.
FIG. 3 is a flowchart showing processing executed by the driving assistance device for a vehicle.
FIG. 4 is a timing chart showing an example in which a drive torque up amount is restricted.
FIG. 5 is a timing chart showing an example in which a drive torque up amount is restricted.
FIG. 6 is a timing chart showing an example in which a drive torque up amount is restricted.
FIG. 7 is a timing chart showing an example in which a drive torque up amount is restricted.

### DESCRIPTION OF EMBODIMENTS

An embodiment of the present invention provides a driving assistance device 100 for a vehicle. The driving assistance device 100 includes: a forward obstacle information calculation unit 120 configured to calculate information on a forward obstacle from a surrounding recognition sensor 40 of the vehicle; an acceleration operation detection unit 110 configured to detect whether an acceleration operation is performed by a driver; a drive torque down control unit 141 configured to execute drive torque down to avoid a collision with the forward obstacle when the drive torque down control unit 141 determines that there is a high chance of the collision with the forward obstacle; a drive torque up control priority unit 142 configured to prohibit the drive torque down control unit 141 from executing the drive torque down and to give priority to executing drive torque up, in a case in which the acceleration operation detection unit 110 detects the acceleration operation performed by the driver at a predetermined level or higher when an execution condition of the drive torque down executed by the drive torque down control unit 141 is satisfied; an abnormal acceleration element detection unit 130 configured to detect whether an event that may cause unintended acceleration is occurring; and a restriction unit 143 configured to restrict a drive torque up amount in a case in which the abnormal acceleration element detection unit 130 detects that the event that may cause the unintended acceleration is occurring when an execution condition gave priority to executing the drive torque up by the drive torque up control priority unit 142 is satisfied. According to the present embodiment, when an abnormal acceleration element that is not intended by the driver is detected, the unintended acceleration can be prevented by restricting the drive torque up amount.

### [Embodiment]

Hereinafter, a preferred embodiment of the present invention will be described with reference to the accompanying drawings.

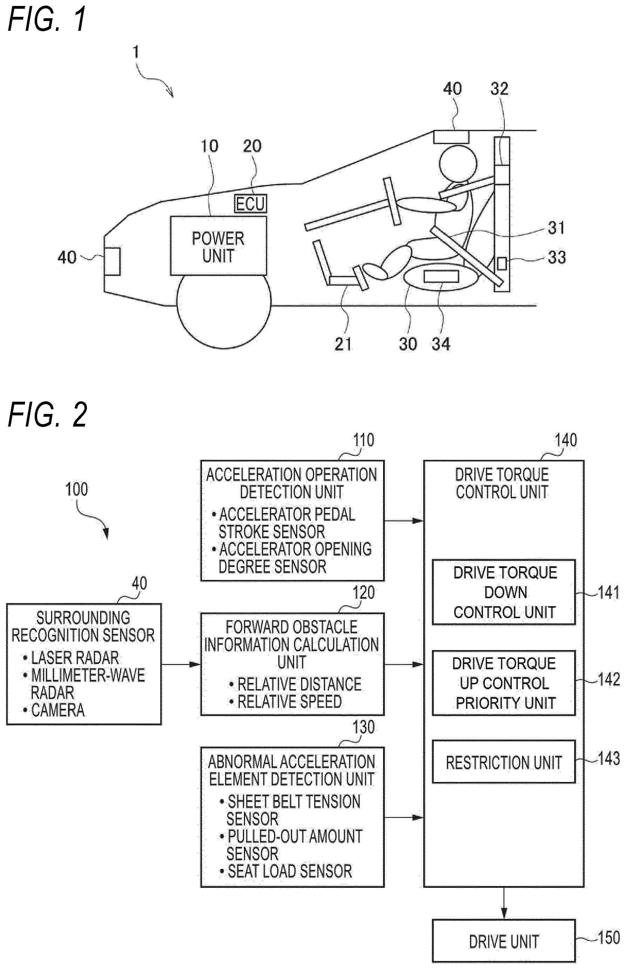

FIG. 1 is a diagram showing a schematic configuration of a main part of a vehicle 1 according to the present embodiment. For the sake of convenience of description, FIG. 1 is simplified to show the present embodiment, and it is assumed that the vehicle 1 has a normally provided configuration even if the configuration is not shown.

The vehicle 1 according to the embodiment includes a power unit 10, an ECU 20, a driver seat 30, a surrounding recognition sensor 40, and the like.

The power unit 10 is a drive source configured to drive the vehicle 1. As the power unit 10, for example, an engine serving as an internal combustion engine, a motor serving as an electric motor, and power obtained by combining an engine and a motor can be used.

The electronic control unit (ECU) 20 is configured to control the power unit 10 and various components constituting the vehicle 1 based on a driving operation such as an operation on an accelerator pedal 21 by a driver and information from various sensors. The number of the ECUs 20 is not limited to one, and the ECU 20 may be implemented by a plurality of ECUs cooperating with each other.

The driver seat 30 is a seat on which a driver sits. The driver seat 30 is provided with a driver seat belt 31 configured to restrain a body of the driver to the driver seat 30. The seat belt 31 is housed in a state of being wound in a seat belt retractor when not in use, and is pulled out from the seat belt retractor and engaged with a buckle by the driver when in use. The driver seat 30 according to the present embodiment is provided with a seat belt tension sensor 32 configured to measure tension applied to the seat belt 31, and a pulled-out amount sensor 33 configured to measure a pulled-out amount of the seat belt 31 pulled out from the seat belt retractor. The driver seat 30 according to the present embodiment is provided with a seat load sensor 34 configured to detect a load of the driver seated on the driver seat 30.

The surrounding recognition sensor 40 is a sensor configured to recognize surroundings of the vehicle 1. The surrounding recognition sensor 40 according to the present embodiment is mainly used to detect a forward obstacle present in front of the vehicle 1. As the surrounding recognition sensor 40, for example, a laser radar, a millimeter wave radar, a camera, or the like may be used.

FIG. 2 is a diagram showing a functional configuration of a driving assistance device 100 for a vehicle according to the present embodiment. A functional configuration of the driving assistance device 100 for a vehicle in FIG. 2 is implemented by, for example, a CPU provided in the ECU 20 executing a program stored in a memory. The driving assistance device 100 for a vehicle includes the surrounding recognition sensor 40, an acceleration operation detection unit 110, a forward obstacle information calculation unit 120, an abnormal acceleration element detection unit 130, a drive torque control unit 140, and a drive unit 150. The same components as those in FIG. 1 are denoted by the same reference signs, and the description thereof will be appropriately omitted.

The acceleration operation detection unit 110 is configured to detect whether an acceleration operation is performed by a driver. Specifically, the acceleration operation detection unit 110 is configured to detect whether an acceleration operation is performed by the driver based on information from an accelerator pedal stroke sensor or an accelerator opening degree sensor. The acceleration operation detection unit 110 is configured to detect that the acceleration operation is performed by the driver when an accelerator pedal stroke is larger than a predetermined stroke based on the information from the accelerator pedal stroke sensor, and to detect that the acceleration operation is not performed by the driver when the accelerator pedal stroke is smaller than the predetermined stroke. Alternatively, the acceleration operation detection unit 110 is configured to detect that the acceleration operation is performed by the driver when an accelerator opening degree is equal to or larger than a predetermined opening degree based on the information from the accelerator opening degree sensor, and to detect that the acceleration operation of the driver is not performed when the accelerator opening degree is smaller than the predetermined opening degree. The acceleration operation detection unit 110 is configured to transmit information indicating whether the acceleration operation is performed by the driver and information from various sensors to the drive torque control unit 140. The acceleration operation detection unit 110 may detect whether the acceleration operation is performed by the driver based on the information from both the accelerator pedal stroke sensor and the accelerator opening degree sensor, may detect whether the acceleration operation is performed by the driver based on information from the accelerator pedal switch (SW), or may detect whether the acceleration operation is performed by the driver according to a method other than the above-described methods.

The forward obstacle information calculation unit 120 is configured to calculate information on a forward obstacle based on information from the surrounding recognition sensor 40. Here, the information on a forward obstacle means a relative distance between a host vehicle and the forward obstacle, and a relative speed between the host vehicle and the forward obstacle. Specifically, the forward obstacle information calculation unit 120 is configured to calculate, based on the information from the surrounding recognition sensor 40, the relative distance between the host vehicle and the forward obstacle and the relative speed between the host vehicle and the forward obstacle. The forward obstacle information calculation unit 120 is configured to transmit the calculated information on a forward obstacle to the drive torque control unit 140.

The abnormal acceleration element detection unit 130 is configured to detect whether an event that may cause unintended acceleration is occurring. Here, the unintended acceleration means acceleration that is not intended by the driver. The event that may cause the unintended acceleration means a phenomenon in which an entire body of the driver leans forward due to, for example, cough or sneezing of the driver, or a phenomenon in which the entire body leans forward due to an abnormality in a health condition such as a heart attack or a subarachnoid hemorrhage. In this phenomenon in which the entire body leans forward, the driver may depress the accelerator pedal 21, and when the accelerator pedal 21 is depressed, the unintended acceleration occurs.

Here, a specific method for the abnormal acceleration element detection unit 130 to detect whether the event that may cause the unintended acceleration is occurring will be described. A first method is a method of detecting, based on a parameter related to the seat belt, whether the event that may cause the unintended acceleration is occurring. As described above, when the event that may cause the unintended acceleration is occurring, the entire body of the driver leans forward. At this time, tension applied to the driver seat belt 31 changes in a manner of increasing, or a pull-out amount (a length) of the seat belt 31 pulled out from the seat belt retractor changes in a manner of being longer.

Therefore, the abnormal acceleration element detection unit 130 can detect, based on the tension applied to the driver seat belt 31, that the event that may cause the unintended acceleration is occurring. The tension applied to the driver seat belt 31 can be acquired from the seat belt tension sensor 32. Specifically, based on the information from the seat belt tension sensor 32, the abnormal acceleration element detection unit 130 detects that the event that may cause the unintended acceleration is occurring when the tension equal to or larger than predetermined tension is applied to the seat belt 31.

The abnormal acceleration element detection unit 130 can detect, based on the pull-out amount of the driver seat belt 31, that the event that may cause the unintended acceleration is occurring. The pull-out amount of the driver seat belt can be acquired from the pull-out amount sensor 33. Based on the information from the pulled-out amount sensor 33, the abnormal acceleration element detection unit 130 detects that the event that may cause the unintended acceleration is occurring when the pull-out amount of the driver seat belt 31 is equal to or larger than a predetermined pull-out amount.

A second method is a method of detecting, based on a change in a seat load applied to the driver seat 30, whether the event that may cause the unintended acceleration is occurring. As described above, when the event that may cause the unintended acceleration is occurring, the entire body of the driver leans forward. At this time, the seat load applied to the driver seat 30 changes. Therefore, the abnormal acceleration element detection unit 130 can detect, based on a change in the seat load applied to the driver seat 30, that the event that may cause the unintended acceleration is occurring. The change in the seat load applied to the driver seat 30 can be acquired from the seat load sensor 34. Specifically, the abnormal acceleration element detection unit 130 detects, based on the information from the seat load sensor 34, that the event that may cause the unintended acceleration is occurring when the seat load increases or decreases at a predetermined rate with respect to an average seat load. As the average sheet load, an average value of seat loads measured at predetermined time intervals from the start of driving to the current time can be used, or a value of the seat load stored in advance for each driver can be used.

The abnormal acceleration element detection unit 130 transmits, to the drive torque control unit 140, information indicating whether the event that may cause the unintended acceleration is occurring. The abnormal acceleration element detection unit 130 may detect, using a method other than the above-described methods, whether the event that may cause the unintended acceleration is occurring.

The drive torque control unit 140 is configured to control drive torque by executing drive control on the drive unit 150. In a normal driving situation, the drive torque control unit 140 executes drive control on the drive unit 150 such that the drive torque becomes drive torque corresponding to the operation on the accelerator pedal 21 performed by the driver. In a situation in which the unintended acceleration may occur, the drive torque control unit 140 executes drive control to prevent the unintended acceleration. The drive torque control unit 140 includes a drive torque down control unit 141, a drive torque up control priority unit 142, and a restriction unit 143.

The drive torque down control unit 141 is configured to determine whether a chance of a collision with the forward obstacle is high based on the information on the forward obstacle calculated by the forward obstacle information calculation unit 120. Specifically, the drive torque down control unit 141 is configured to calculate time until the host vehicle collides with the forward obstacle at the current time by dividing the "relative distance between the host vehicle and the forward obstacle" by the "relative speed between the host vehicle and the forward obstacle". When the calculated time is equal to or shorter than predetermined time, it is determined that the chance of the collision with the forward obstacle is high, and when the calculated time is longer than the predetermined time, it is determined that the chance of the collision with the forward obstacle is not high.

When the drive torque down control unit 141 determines that the chance of the collision with the forward obstacle is high, the drive torque down control unit 141 executes drive torque down to avoid the collision with the forward obstacle. This processing is processing for reducing damage caused by the collision with the forward obstacle. Specifically, when the power unit 10 includes an engine, the drive torque down control unit 141 executes the drive torque down by setting a throttle opening degree and a fuel injection amount to 0. When the power unit 10 includes a motor, the drive torque down control unit 141 stops supplying of power to the motor to execute the drive torque down. However, as will be described later, even in a case in which the drive torque down control unit determines that there is a high chance of the collision with the forward obstacle, when the drive torque up control priority unit 142 notifies to prohibit the drive torque down, the drive torque down is not executed. When it is determined that the chance of the collision with the forward obstacle is high, the drive torque down control unit 141 notifies the drive torque up control priority unit 142 of information indicating that an execution condition of the drive torque down is satisfied.

The drive torque up control priority unit 142 is configured to prohibit the drive torque down control unit 141 from executing the drive torque down and to give priority to executing drive torque up, in a case in which the acceleration operation detection unit 110 detects the acceleration operation performed by the driver at a predetermined level or higher when the execution condition of the drive torque down executed by the drive torque down control unit 141 is satisfied. This processing is an accelerator override function, and is processing for giving priority to the acceleration operation performed by the driver over the drive torque down for reducing damage caused by the collision with the forward obstacle. Specifically, when information indicating that the execution condition of the drive torque down is satisfied is notified from the drive torque down control unit 141, the drive torque up control priority unit 142 notifies the drive torque down control unit 141 to prohibit the drive torque down when the acceleration operation performed by the driver at a predetermined level or higher is detected based on information from the various sensors (the accelerator pedal stroke sensor and the accelerator opening degree sensor) acquired from the acceleration operation detection unit 110. Further, the drive torque up control priority unit 142 gives priority to executing the drive torque up by executing drive control on the drive unit 150. When the execution condition gave to executing the drive torque up is satisfied, the drive torque up control priority unit 142 notifies the restriction unit 143 of information indicating that the execution condition gave priority to executing the drive torque up is satisfied.

The restriction unit 143 is configured to restrict a drive torque up amount when the execution condition (the condition for executing the accelerator override function) gave priority to executing the drive torque up by the drive torque up control priority unit 142 is satisfied, and when it is detected by the abnormal acceleration element detection unit 130 that the event that may cause the unintended acceleration is occurring. This processing is processing for preventing the unintended acceleration. Specifically, in a case in which the information indicating that the event that may cause the unintended acceleration is occurring is received from the abnormal acceleration element detection unit 130 when the information indicating that the execution condition gave priority to executing the drive torque up is satisfied is notified from the drive torque up control priority unit 142, the restriction unit 143 restricts the drive torque up amount.

Here, a specific method for restricting the drive torque up amount by the restriction unit 143 will be described. A first method is a method of reducing the drive torque up amount. Specifically, the restriction unit 143 executes drive control on the drive unit 150 such that a drive torque up amount is smaller than the drive torque up amount when the drive torque up control priority unit 142 increases the drive torque. For example, when the power unit 10 includes an engine, the restriction unit 143 reduces an opening amount of the throttle opening degree and an amount of injected fuel. When the power unit 10 includes a motor, the drive torque down control unit 141 reduces the supply of power to the motor.

A second method is a method of setting the drive torque to 0. For example, when the power unit 10 includes an engine, the restriction unit 143 sets the opening amount of the throttle opening degree to 0 or sets the amount of injected fuel to 0. When the power unit 10 includes a motor, the restriction unit 143 stops the supply of power to the motor.

A third method is a method of providing a limit on the maximum drive torque. Specifically, the restriction unit 143 executes drive control on the drive unit 150 such that the maximum drive torque is smaller than a predetermined drive torque. For example, when the power unit 10 includes an engine, the restriction unit 143 executes control such that the opening amount of the throttle opening degree is smaller than a predetermined opening amount, or executes control such that the amount of injected fuel is smaller than a predetermined amount. When the power unit 10 includes a motor, the restriction unit 143 executes control so as not to supply power to the motor at predetermined power or more.

A fourth method is a method of providing delay time. Specifically, the restriction unit 143 executes drive control on the drive unit 150 such that the drive torque is increased later than a timing when the drive torque up control priority unit 142 increases the drive torque. For example, when the power unit 10 includes an engine, the restriction unit 143 executes control such that the throttle opening degree is opened with a delay, or executes control such that the injected fuel is injected with a delay. Further, when the power unit 10 includes a motor, the restriction unit 143 executes control such that power is supplied to the motor with a delay.

The restriction unit 143 is not limited to a case of executing any one of the first method to the fourth method, and the drive torque up amount may be restricted by combining two or more of the first method to the fourth method.

The drive unit 150 includes the power unit 10 and other components necessary for controlling the drive torque. When the power unit 10 includes an engine, the drive unit 150 includes a throttle body, a fuel injector, and the like. When the power unit 10 includes a motor, an inverter and the like are provided.

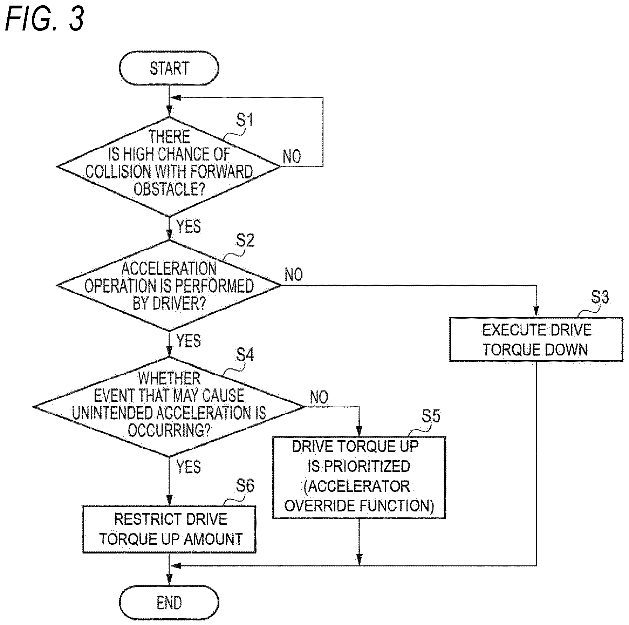

FIG. 3 is a flowchart showing processing executed by the driving assistance device 100 for a vehicle according to the present embodiment. The flowchart of FIG. 3 is achieved by, for example, a CPU provided in the ECU 20 executing a program stored in the memory. The flowchart of FIG. 3 is started in response to an instruction to start the vehicle 1 by the driver.

In step S1, the drive torque down control unit 141 determines whether the chance of the collision with the forward obstacle is high based on the information on the forward obstacle calculated by the forward obstacle information calculation unit 120. The specific processing in step S1 is omitted since the processing has already been described in the description of the drive torque down control unit 141 in the functional configuration in FIG. 2. When the chance of the collision with the forward obstacle is high, the processing proceeds to S2, and when the chance of the collision with the forward obstacle is not high, the processing in S1 is continued until the chance of the collision with the forward obstacle becomes high.

In step S2, the acceleration operation detection unit 110 detects whether the acceleration operation is performed by a driver. The specific processing in step S2 is omitted since the processing has already been described in the description of the acceleration operation detection unit 110 in the functional configuration in FIG. 2. When it is detected that the acceleration operation is not performed by the driver, the processing proceeds to S3, and when it is detected that the acceleration operation is performed by the driver, the processing proceeds to S4.

In step S3, the drive torque down control unit 141 executes the drive torque down to avoid the collision with the forward obstacle. A case of proceeding to step S3 is a situation in which there is no need to execute the accelerator override function since the chance of the collision with the forward obstacle is high and the driver does not perform the acceleration operation, and processing for reducing damage caused by the collision with the forward obstacle is performed. The specific processing in step S3 is omitted since the processing has already been described in the description of the drive torque down control unit 141 in the functional configuration in FIG. 2.

In step S4, the abnormal acceleration element detection unit 130 detects whether the event that may cause the unintended acceleration is occurring. As described above, the event that may cause the unintended acceleration is the phenomenon in which an entire body of the driver leans forward due to, for example, cough or sneezing of the driver, or the phenomenon in which the entire body leans forward due to an abnormality in a health condition such as a heart attack or a subarachnoid hemorrhage. The specific processing in step S4 is omitted since the processing has already been described in the description of the abnormal acceleration element detection unit 130 in the functional configuration in FIG. 2. When it is detected that the event that may cause the unintended acceleration is not occurring, the processing proceeds to S5, and when it is detected that the event that may cause the unintended acceleration is occurring, the processing proceeds to S6.

In step S5, the drive torque up control priority unit 142 executes control to prohibit the drive torque down control unit 141 form executing the drive torque down and to give priority to executing of the drive torque up. In a case of proceeding to step S5, the chance of the collision with the forward obstacle is high, but the driver performs the acceleration operation. Therefore, processing for executing the accelerator override function is executed. The specific processing in step S5 is omitted since the processing has already been described in the description of the drive torque up control priority unit 142 in the functional configuration in FIG. 2.

In step S6, the restriction unit 143 restricts the drive torque up amount. In a case of proceeding to step S6, the condition for executing the accelerator override function is satisfied, but the event that may cause the unintended acceleration is occurring. Therefore, the control is executed to restrict the drive torque up amount. Specifically, methods for restricting the drive torque up amount include the first to fourth methods as described above.

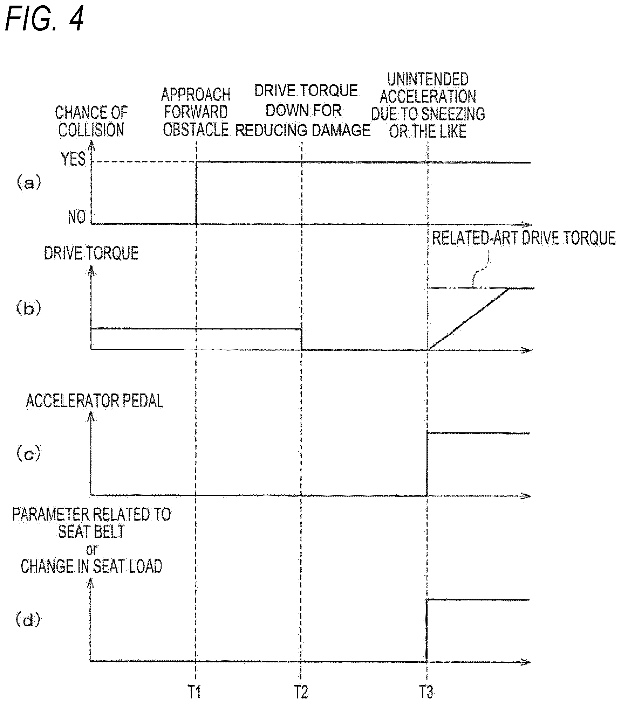

FIG. 4 is a timing chart showing an example in which the drive torque up amount is restricted according to the first method. As shown in FIG. 4, at a time point T1, due to approaching the forward obstacle, the chance of the collision changes from "no" to "yes" as shown in (a). Next, at a time point T2, the drive torque down is executed as shown in (b) in order to reduce damage. Next, at a time point T3, as shown in (c), the acceleration operation is performed at a predetermined level or higher by the accelerator pedal, and at the same time, the parameter related to the seat belt is increased or the seat load is changed as shown in (d). Accordingly, the event that may cause the unintended acceleration is occurring. Therefore, as shown in (b), the drive torque up amount is restricted. Here, an example is shown in which, at the time point T3, the drive torque is 0, and control is executed such that the drive torque gradually becomes the related-art drive torque (the drive torque when the accelerator override function indicated by a two-dot chain line is executed). In this way, by gradually increasing the drive torque, it is possible to prevent the acceleration which is not intended by the driver, and it is possible to generate the drive torque according to the acceleration operation even when the driver intentionally performs the acceleration operation.

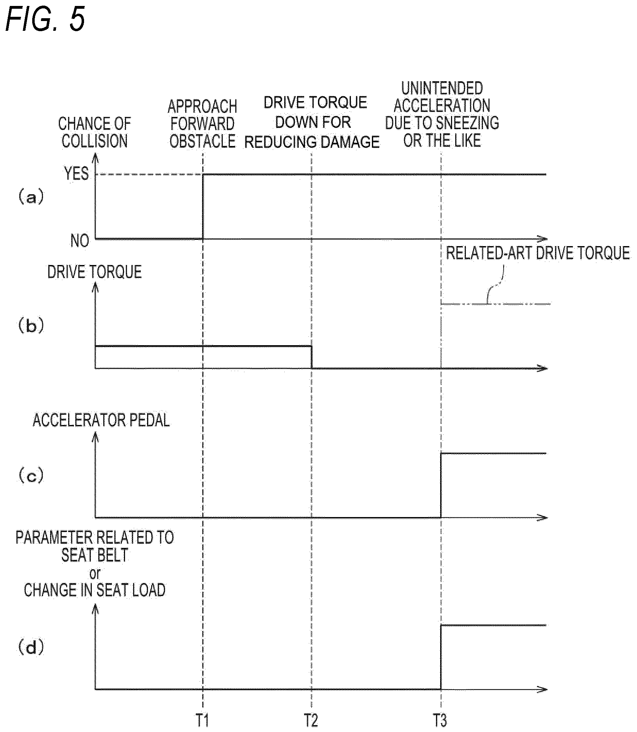

FIG. 5 is a timing chart showing an example in which the drive torque up amount is restricted according to the second method. The method for restricting the drive torque up amount at the time point T3 is different from that in FIG. 4. Here, as shown in (b), the drive torque is controlled to be 0 continuously from the time point T3. In this way, by setting the drive torque to 0, it is possible to prevent the acceleration which is not intended by the driver.

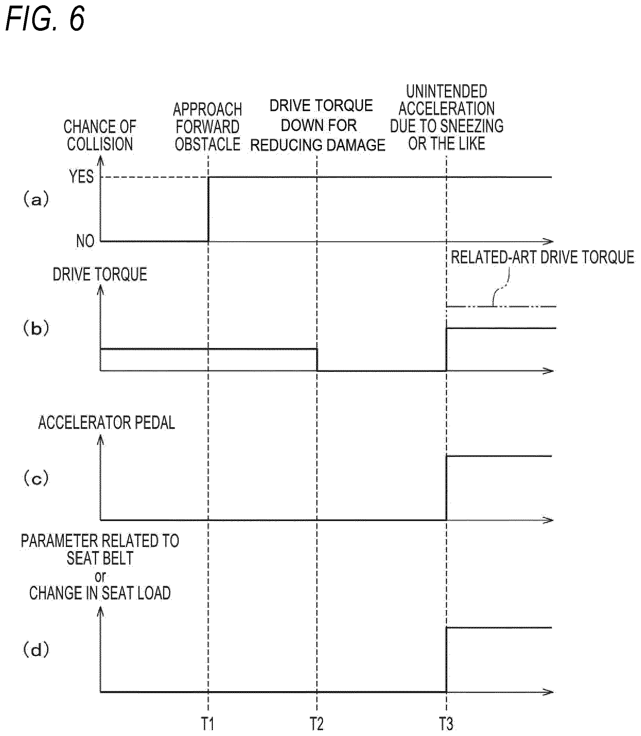

FIG. 6 is a timing chart showing an example in which the drive torque up amount is restricted according to the third method. The method for restricting the drive torque up amount at the time point T3 is different from that in FIG. 4. Here, as shown in (b), a limit is set for the maximum drive torque, and the drive torque is controlled so as to be smaller than the predetermined drive torque. In this way, by setting the drive torque to be smaller than the predetermined drive torque, it is possible to prevent the acceleration which is not intended by the driver.

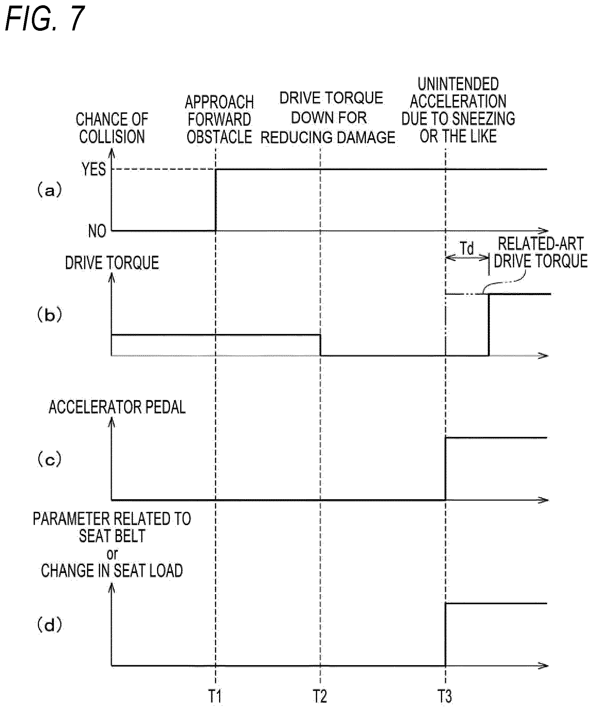

FIG. 7 is a timing chart showing an example in which the drive torque up amount is restricted according to the fourth method. The method for restricting the drive torque up amount at the time point T3 is different from that in FIG. 4. Here, as shown in (b), control is executed such that the drive torque is increased later than the time point T3. Delay time Td shown in FIG. 7 is preferably set to, for example, time from a moment at which the driver unintentionally starts depressing the accelerator pedal 21 due to cough or sneezing of the driver to a moment at which the driver releases the depression and the accelerator pedal 21 returns to an original state thereof. By setting the delay time Td, even when the driver depresses the accelerator pedal 21 due to cough or sneezing of the driver, the driver can notice that the accelerator pedal 21 is unintentionally depressed, and the depression can be released within the delay time Td. Therefore, it is possible to prevent the acceleration which is not intended by the driver. On the other hand, when the driver intentionally performs the acceleration operation, the driver continues the acceleration operation beyond the delay time Td. Therefore, drive torque corresponding to the acceleration operation can be generated immediately after the delay time Td.

As described above, according to the present embodiment, the restriction unit 143 restricts the drive torque up amount when the execution condition gave priority to executing the drive torque up by the drive torque up control priority unit 142 is satisfied, and when it is detected by the abnormal acceleration element detection unit 130 that the event that may cause the unintended acceleration is occurring. That is, when an abnormal acceleration element that is not intended by the driver is detected, by executing control to restrict the drive torque up corresponding to the accelerator opening degree, it is possible to operate the accelerator override function in a form of not following an original purpose, that is, it is possible to prevent the unintended acceleration.

According to the present embodiment, the abnormal acceleration element detection unit 130 determines, based on the parameter related to the seat belt of the driver seat, whether the event that may cause the unintended acceleration is occurring. By using a fact that the parameter related to the seat belt changes when the driver leans forward due to, for example, cough or sneezing of the driver, if the acceleration operation (the depression of the accelerator pedal 21) of the driver and the change in the parameter related to the seat belt occur at the same time, it is possible to more accurately determine whether the event that may cause the unintended acceleration is occurring. Therefore, the unintended acceleration can be more accurately prevented.

According to the present embodiment, the abnormal acceleration element detection unit 130 determines, based on a change in the seat load, whether the event that may cause the unintended acceleration is occurring. By using a fact that the seat load changes when the driver leans forward due to, for example, cough or sneezing of the driver, if the acceleration operation (the depression of the accelerator pedal 21) of the driver and the change in the parameter related to the seat belt occur at the same time, it is possible to more accurately determine whether the event that may cause the unintended acceleration is occurring. Therefore, the unintended acceleration can be more accurately prevented.

In the above-described embodiment, a case has been described in which whether the event that may cause the unintended acceleration is occurring is determined based on the parameter related to the seat belt of the driver seat or the change in the seat load. Alternatively, the determination may be made according to another method. For example, by measuring a particle velocity of exhaled breath of the driver and detecting cough or sneezing of the driver based on the measured particle velocity of exhaled breath, it may be determined whether the event that may cause the unintended acceleration is occurring. For example, based on information from a body sensor such as a heartbeat sensor worn by the driver, it may be determined whether the event that may cause the unintended acceleration is occurring. Further, it may be determined, based on an image captured by a camera that captures an image of a vehicle cabin, whether the event that may cause the unintended acceleration is occurring.

However, for example, according to the method of detecting based on the above-described particle velocity of exhaled breath, detection may not be appropriately executed when the driver coughs or sneezes with the mouth of the driver closed. In the method of detecting based on the above-described information from the body sensor, it may only be detected that the driver is simply panicking in fear of a collision, and it may be impossible to appropriately execute detection. Further, according to the method of detecting based on the above-described image captured by the camera that captures an image of a vehicle cabin, detection may not be appropriately executed in backlight or darkness. On the other hand, by executing determination based on the parameter related to the seat belt of the driver seat or the change in the seat load, it is possible to more accurately determine whether the event that may cause the unintended acceleration is occurring.

Although the embodiments of the present invention have been described above, the present invention is not limited to the above-described embodiments, and modifications and the like can be made within the scope of the present invention as defined by the appended claims. The driving assistance device 100 for a vehicle to which the present invention is applied may be implemented by a plurality of computer devices cooperating with each other.

### REFERENCE SIGNS LIST

1: vehicle
10: power unit
20: ECU
30: driver seat
31: seat belt
32: seat belt tension sensor
33: pull-out amount sensor
34: seat load sensor
40: surrounding recognition sensor
100: driving assistance device for vehicle
110: acceleration operation detection unit
120: forward obstacle information calculation unit
130: abnormal acceleration element detection unit
140: drive torque control unit
141: drive torque down control unit
142: drive torque up control priority unit
143: restriction unit
150: drive unit

## Claims

1. A driving assistance device (100) for a vehicle (1) comprising:
a forward obstacle information calculation unit (120) configured to calculate information on a forward obstacle from a surrounding recognition sensor (40) of the vehicle (1);
an acceleration operation detection unit (110) configured to detect whether an acceleration operation is performed by a driver;
a drive torque down control unit (141) configured to execute drive torque down to avoid a collision with the forward obstacle when the drive torque down control unit (141) determines that there is a high chance of the collision with the forward obstacle;
a drive torque up control priority unit (142) configured to prohibit the drive torque down control unit (141) from executing the drive torque down and to give priority to executing drive torque up in a case in which the acceleration operation detection unit (110) detects the acceleration operation performed by the driver at a predetermined level or higher when an execution condition of the drive torque down executed by the drive torque down control unit (141) is satisfied;
an abnormal acceleration element detection unit (130) configured to detect whether an event that causes unintended acceleration is occuring; and
a restriction unit (143) configured to restrict a drive torque up amount, in a case in which the abnormal acceleration element detection unit (130) detects that the event that causes the unintended acceleration is occurring when an execution condition gave priority to executing the drive torque up by the drive torque up control priority unit (142) is satisfied;
the driving assistance device being **characterized in that**:
the abnormal acceleration element detection unit (130) is configured to determine the event that causes the unintended acceleration is occurring when the tension applied to the seat belt (31) increases, or, when the length by which the seat belt (31) is pulled out increases.

2. The driving assistance device (100) for a vehicle (1) according to claim 1,
wherein the abnormal acceleration element detection unit (130) is configured to determine, based on a change in a seat load of a driver seat (30), whether the event that causes the unintended acceleration is occurring.

## Patentansprüche

1. Fahrassistenzvorrichtung (100) für ein Fahrzeug (1), umfassend:
eine Informationsberechnungseinheit (120) für ein vorausliegendes Hindernis, die dazu konfiguriert ist, Informationen über ein vorausliegendes Hindernis von einem Umgebungserkennungssensor (40) des Fahrzeugs (1) zu berechnen;
eine Beschleunigungsvorgang-Erfassungseinheit (110), die dazu konfiguriert ist, zu erfassen, ob ein Beschleunigungsvorgang durch einen Fahrer durchgeführt wird;
eine Abwärtsantriebsmoment-Steuereinheit (141), die dazu konfiguriert ist, ein Abwärtsantriebsmoment auszuführen, um eine Kollision mit dem vorausliegenden Hindernis zu vermeiden, wenn die Abwärtsantriebsmoment-Steuereinheit (141) bestimmt, dass eine hohe Wahrscheinlichkeit einer Kollision mit dem vorausliegenden Hindernis besteht;
eine Aufwärtsantriebsmoment-Steuerprioritätseinheit (142), die dazu konfiguriert ist, zu unterbinden, dass die Abwärtsantriebsmoment-Steuereinheit (141) das Abwärtsantriebsmoment ausführt, und einem Ausführen eines Aufwärtsantriebsmoments Priorität einzuräumen, falls die Beschleunigungsvorgang-Erfassungseinheit (110) den Beschleunigungsvorgang, der durch den Fahrer durchgeführt wird, auf einem vorbestimmten Niveau oder höher erfasst, wenn eine Ausführungsbedingung des Abwärtsantriebsmoments, das durch die Abwärtsantriebsmoment-Steuereinheit (141) ausgeführt wird, erfüllt ist;
eine Erfassungseinheit (130) eines anormalen Beschleunigungselements, die dazu konfiguriert ist, zu erfassen, ob ein Ereignis, das eine unbeabsichtigte Beschleunigung verursacht, auftritt; und
eine Beschränkungseinheit (143), die dazu konfiguriert ist, einen Aufwärtsantriebsmomentbetrag zu beschränken, falls die Erfassungseinheit (130) eines anormalen Beschleunigungselements erfasst, dass das Ereignis, das die unbeabsichtigte Beschleunigung verursacht, auftritt, wenn eine Ausführungsbedingung dem Ausführen des Aufwärtsantriebsmoments durch die Aufwärtsantriebsmoment-Steuerprioritätseinheit (142) Priorität eingeräumt hat, erfüllt ist;
wobei die Fahrassistenzvorrichtung **dadurch gekennzeichnet ist, dass**:
die Erfassungseinheit (130) eines anormalen Beschleunigungselements dazu konfiguriert ist, zu bestimmen, dass das Ereignis, das die unbeabsichtigte Beschleunigung verursacht, auftritt, wenn die an dem Sicherheitsgurt (31) anliegende Spannung zunimmt oder wenn die Länge, um die der Sicherheitsgurt (31) herausgezogen wird, zunimmt.

2. Fahrassistenzvorrichtung (100) für ein Fahrzeug (1) nach Anspruch 1,
wobei die Erfassungseinheit (130) eines anormalen Beschleunigungselements dazu konfiguriert ist, basierend auf einer Änderung einer Sitzlast eines Fahrersitzes (30) zu bestimmen, ob das Ereignis, das die unbeabsichtigte Beschleunigung verursacht, auftritt.

## Revendications

1. Dispositif d'aide à la conduite (100) pour un véhicule (1) comprenant :
une unité de calcul d'informations d'obstacle avant (120) configurée pour calculer des informations sur un obstacle avant à partir d'un capteur de reconnaissance d'environnement (40) du véhicule (1) ;
une unité de détection d'opération d'accélération (110) configurée pour détecter si une opération d'accélération est effectuée par un conducteur ;
une unité de commande de réduction du couple d'entraînement (141) configurée pour exécuter une réduction du couple d'entraînement afin d'éviter une collision avec l'obstacle avant lorsque l'unité de commande de réduction du couple d'entraînement (141) détermine qu'il existe un risque élevé de collision avec l'obstacle avant ;
une unité de priorité de commande d'augmentation du couple d'entraînement (142) configurée pour interdire à l'unité de commande de réduction du couple d'entraînement (141) d'exécuter la réduction du couple d'entraînement et pour donner la priorité à l'exécution de l'augmentation du couple d'entraînement dans un cas dans lequel l'unité de détection d'opération d'accélération (110) détecte l'opération d'accélération effectuée par le conducteur à un niveau prédéterminé ou supérieur lorsqu'une condition d'exécution de la réduction du couple d'entraînement exécutée par l'unité de commande de réduction du couple d'entraînement (141) est satisfaite ;
une unité de détection d'élément d'accélération anormale (130) configurée pour détecter si un événement provoquant une accélération involontaire se produit ; et
une unité de restriction (143) configurée pour restreindre une quantité d'augmentation du couple d'entraînement, dans un cas dans lequel l'unité de détection d'élément d'accélération anormale (130) détecte que l'événement qui provoque l'accélération involontaire se produit lorsqu'une condition d'exécution donnant la priorité à l'exécution de l'augmentation du couple d'entraînement par l'unité de priorité de commande d'augmentation du couple d'entraînement (142) est satisfaite ;
le dispositif d'aide à la conduite étant **caractérisé en ce que** :
l'unité de détection d'élément d'accélération anormale (130) est configurée pour déterminer que l'événement qui provoque l'accélération involontaire se produit lorsque la tension appliquée à la ceinture de sécurité (31) augmente, ou lorsque la longueur selon laquelle la ceinture de sécurité (31) est tirée augmente.

2. Dispositif d'aide à la conduite (100) pour un véhicule (1) selon la revendication 1,
dans lequel l'unité de détection d'élément d'accélération anormale (130) est configurée pour déterminer, sur la base d'un changement dans une charge de siège d'un siège conducteur (30), si l'événement qui provoque l'accélération involontaire se produit.
